# EUROPEAN PATENT SPECIFICATION

(11) **EP 3 097 487 B1**
(45) Date of publication and mention of the grant of the patent: **13.03.2019**
(21) Application number: 15703355.6
(22) Date of filing: 16.01.2015
(51) Int. Cl.: G06F 9/52, G06Q 10/10

(54) **UPDATING A USER INTERFACE TO A SERVICE**
AKTUALISIERUNG EINER BENUTZERSCHNITTSTELLE FÜR EINEN DIENST
MISE À JOUR D'UNE INTERFACE UTILISATEUR À UN SERVICE

(30) Priority: 22.01.2014 US 201414160746
(43) Date of publication of application: 30.11.2016
(73) Proprietor: Microsoft Technology Licensing, LLC, Redmond, WA 98052-6399 (US)
(72) Inventor: KOZLOWSKI, Dawid, Redmond, Washington 98052-6399 (US); BORYSENKO, Michael I., Redmond, Washington 98052-6399 (US); ALEV, Umut, Redmond, Washington 98052-6399 (US); WOOD, Matt, Redmond, Washington 98052-6399 (US); HIMBERGER, Andrew Michael, Redmond, Washington 98052-6399 (US); BERNSTEIN, Ethan Joseph, Redmond, Washington 98052-6399 (US); WELLS, Stephen Thomas, Redmond, Washington 98052-6399 (US); CARTER, Benjamin Franklin, Redmond, Washington 98052-6399 (US)
(74) Representative: Grünecker Patent- und Rechtsanwälte PartG mbB
(86) International application number: PCT/US2015/011669
(87) International publication number: WO 2015/112431

(56) References cited:
- US-A1- 2004 107 405
- US-A1- 2005 108 332

## Description

### TECHNICAL FIELD

Aspects of the disclosure are related to computing hardware and software technology, and in particular to updating user interfaces to services.

### TECHNICAL BACKGROUND

In the field of computing hardware and software technology, users increasingly access and engage with a variety of online services on a routine basis. Their access is provided at least in part by way of user interfaces that include various objects and other interface elements with which users may interact. In a brief example, a user interface to an email service may include various objects and other elements representative of emails, menu items, and other interface elements.

A user interface may be rendered on a suitable computing device such that a user can interact with its interface elements as part of a user experience with a service. In some instances, the user interface is rendered by a client application running within the context of a browser application or some other execution environment that assists with driving the user interface in response to user interactions. For example, an email inbox may be presented in a user interface that includes a list of emails. A user may flag one of the emails or otherwise make some modification to it that is then visualized in the user interface.

Updates to a user interface may occur frequently and can originate both locally and from a service, which may sometimes be referred to as the cloud. For example, a user interacting with a service via a user interface on a device may initiate one update to an object, while the same user or another user interacting with the same service via a different user interface may initiate another update to the same object. Such concurrent updates may lead to inconsistent user experiences, such as when a visualization changes unbeknownst to a user.

Various solutions to these occurrences include letting the service control such that its updates are always implemented or performing merges locally that take into account both the local updates and the service -originated updates. Allowing service-driven updates to control may result in a user interface flashing between states. As an example, a user may type a paragraph in a shared email that flashes when another user changes the subject of the email. If a cloud version of the email does not include the paragraph, it may disappear momentarily from other versions. Data merging may avoid this situation but can be complex to implement, especially across different platforms.

In addition, there are at least two ways in which client applications handle local updates to a user interface. Some applications synchronize data with the cloud, while other applications may instead report actions to the cloud. When synchronizing data, client applications communicate a new version of a file or object to the cloud that reflects an action taken by a user in a user interface. When reporting actions, an application reports what action was taken to the cloud, but does not communicate a file or object. In both cases, the cloud may return an update that, when implemented by a client application in a user interface, results in a visualization in the user interface that is inconsistent with a user's actions.

US 2004/0107405 A1 discloses a method, a system, and a program for managing access to data objects by multiple user programs over a network. A page is generated including at least one editable field of data from at least one data object. An initial value is calculated from the at least one data object and the page and the initial value are transmitted to one user program over the network. The page and the initial value are received from the user program, wherein the received page includes modified data in at least one editable field. A current value is calculated from the at least one data object after receiving the page and a determination is made as to whether the initial value transmitted with the received page is different than the current value. If the initial and current values match, then the data object is updated with the modified data included in the received page.

US 2005/0108332 A1 discloses methods, systems, computer program products, and data structures for efficiently storing and accessing electronic messages. Generally, electronic messages are created and transformed in accordance with an electronic message schema hierarchy. Electronic messages can be created according to a general message schema that defines a format for data fields that are common to all types of electronic messages (e.g. electronic mail, instant message, fax message). Electronic messages can also be extended according to message extension schemas that define formats for adding protocol specific and/or or application specific data fields to an electronic message. Data fields added in accordance with message extension schemas can differ between electronic messages types. Having some commonly defined fields and other differently defined fields promotes efficient storage and access of electronic messages, while also facilitating message compatibility with existing message protocols and message applications.

### OVERVIEW

The present invention refers to a system according to claim 1 and a method according to claim 3. Preferred embodiments are disclosed in the dependent claims.

Provided herein are systems, methods, and software for implementing updates to a user interface based at least in part on whether or not service-driven updates account for events that may have occurred with respect to the user interface. This may enhanced the user experience by improving the consistency of visualizations in user interfaces.

In at least one implementation, an application renders a user interface to a service and an initial visualization is surfaced in response to the occurrence of an event. After surfacing the initial visualization, the application receives an update from the service that includes a proposed visualization and determines whether or not the proposed visualization accounts for the event. If the proposed visualization accounts for the event, the proposed visualization is surfaced in place of the initial visualization. But if the proposed visualization does not account for the event, the initial visualization may be persisted until another visualization is identified that accounts for the event.

In some implementations, the service may receive a report from the application indicative of at least the event, such as a user interaction that occurred in the user interface. The report may also include an initial correlation identifier associated with the initial visualization surfaced in the user interface. The service identifies a proposed visualization to surface in the user interface, generates a proposed correlation identifier based at least in part on a correlation identifier, and associates the proposed correlation identifier with the proposed visualization. The service then communicates an interface update to the application that includes the proposed visualization and the proposed correlation identifier.

This Overview is provided to introduce a selection of concepts in a simplified form that are further described below in the Technical Disclosure. It may be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure can be better understood with reference to the following drawings. While several implementations are described in connection with these drawings, the disclosure is not limited to the implementations disclosed herein. On the contrary, the intent is to cover all alternatives, modifications, and equivalents.
Figure 1 illustrates a representative service architecture and illustrates an operational scenario in an implementation.
Figure 2 illustrates an update process in an implementation.
Figure 3 illustrates an update process in an implementation.
Figure 4 illustrates a service architecture in an implementation.
Figure 5 illustrates an update process in an implementation.
Figures 6A-6B each illustrate an operational sequence in an implementation.
Figure 7A-7B each illustrate an operational sequence in an implementation.
Figure 8 illustrates an operational scenario in an implementation.
Figure 9 illustrates a computing system in various implementations.

### TECHNICAL DISCLOSURE

Implementations disclosed herein include enhancements to the way in which user interfaces to services are updated. In various implementations, client applications render a user interface to a service. Initial visualizations may be surfaced in the user interface that are associated with the occurrence of an event. In accordance with an action-based paradigm for communicating with the service, the client application reports the event to the service and persists the initial visualization until a proposed visualization is received from the service that accounts for the reported event. In this manner, consistency in the user interface is improved and inconsistent behavior, such as flashing between states, is avoided or at least mitigated to an extent that enhances the user experience.

It may be appreciated that the term initial is used herein to distinguish one type of visualization or revision that is identified by a client application and surfaced in a user interface from other visualizations that are not identified by the client application. The term initial is not intended to limit a particular visualization or revision to being the first in a sequence of the same. Rather, an initial visualization or revision is merely one that precedes a proposed visualization or proposed revision that is identified by a service.

In a brief example, a client application renders a user interface to a service that includes various interface objects. An example of the service includes, but is not limited to, an email service, an e-commerce service, a social networking service, an office productivity service, an anti-virus service, a gaming service, and a micro-blogging service. An event may occur in response to which the application surfaces an initial visualization associated with the event. For example, a user interaction with an interface object may occur or a background process may execute, both of which may be considered an event that drives the application to surface the initial visualization. Other events are possible and may be considered within the scope of the present disclosure.

The application communicates with the service to report that the event occurred, thereby allowing the service to determine a proper state for the user interface. Such reporting of events is in accordance with an action-based paradigm where clients report actions up to a service and, in return, receive data from the service that is rendered in the user interface. In this example, the data is a proposed visualization identified by the service.

The service may consider other events in addition to reported events when identifying a proposed visualization, such as events occurring in other instances of the user interface. For example, a user may interact with multiple user interfaces to the service, such as when a mobile email client is used at the same time or proximate in time to when a desktop email client is used. In another example, multiple users may engage with a service in a collaboration scenario, such as when multiple users work on a shared document or when multiple players engage in an online or multi-user game. Yet another example is when multiple users interact with a social networking service or when one user interacts with a social networking service via multiple user interfaces.

Rather than always surface the proposed visualization, the client application determines whether or not the proposed visualization accounts for the event (in association with which the initial visualization was surfaced). If the proposed visualization does in fact account for the event, the application surfaces the proposed visualization in place of the initial visualization. However, if the proposed visualization does not account for the event, the client application persists the initial visualization in the user interface.

Persisting with the initial visualization may improve the consistency of a user interface by surfacing and maintaining a visualization that a user expects based on how they interact with a user interface, rather than surfacing a visualization communicated by a service that may be inconsistent with the user's expectations. A visualization proposed by the service may be inconsistent with the user's expectations for a variety of reasons, including that an update and a reported event cross in transit, that a client application is delayed in reporting events (such as during periods of limited or no online access), or that a service is delayed in processing reported events. Other factors are possible and may be considered within the scope of the disclosure.

In some scenarios, the initial visualization is persisted with until another proposed visualization is received that accounts for the event. However, in other scenarios the initial visualization is ultimately replaced by either a proposed visualization that does not account for the event or by another locally-driven visualization.

Whether or not a proposed visualization accounts for an event may be determined in a variety of ways. In at least one implementation, correlation identifiers are employed by client applications and services to determine whether or not a proposed visualization accounts for an event. In such an implementation, a client application associates an initial correlation identifier with an initial visualization and communicates the initial correlation identifier to a service when reporting an event. Other client applications may also communicate other reports as events occur which also include correlation identifiers. Each correlation identifier is associated with a specific visualization.

The service receives the event reports from the client applications and, as each event is reported, identifies a proposed visualization for the event. In addition, a proposed correlation identifier is generated by the service to be associated with each proposed visualization. The proposed correlation identifier is generated based on or otherwise derived from whichever correlation identifier is associated with the event corresponding to the proposed visualization. As a result, a given update communicated by the service to a client application, which includes both a proposed visualization and an associated proposed correlation identifier, can be examined by the client application to determine whether or not an event reported by that client is the subject of or otherwise accounted for by the proposed visualization. This may be determined by a comparison of the proposed correlation identifier included in the update to the initial correlation identifier associated with the event. Thus, the comparison will indicate that a proposed visualization accounts for an event when a correlation identifier used to generate a proposed correlation identifier associated with the proposed visualization is the initial correlation identifier associated with the event. The comparison will indicate that the proposed visualization does not account for an event when a correlation identifier used to generate the proposed correlation identifier is not the initial correlation identifier associated with the event.

In various implementations a user interface includes interface objects with which a user may interact. An email object is an example of an interface object with which a user may interact, as is a gaming object, a social networking object, or any other type of object with which a user may interact in the context of a service. An example of an event is a user interaction via the user interface with an interface object, or possibly some other triggering event. An example of an initial visualization is an initial revision to the interface object, while proposed visualization may be a proposed revision to the interface object.

In some implementations, the visualizations surfaced in a user interface are revisions to objects. For instance, an email object may be revised from one state to another in response to a command received via the user interface to change the state of an email represented by the email object. In another example, a graphic, icon, or other visual element may be revised from one state to another. As such, the occurrence of an event may trigger an initial revision to an email object or some other object in a user interface. A proposed revision to the email object may be surfaced if it accounts for the event.

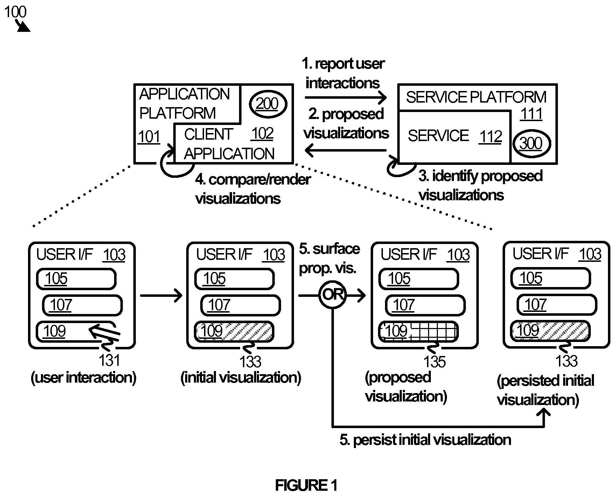

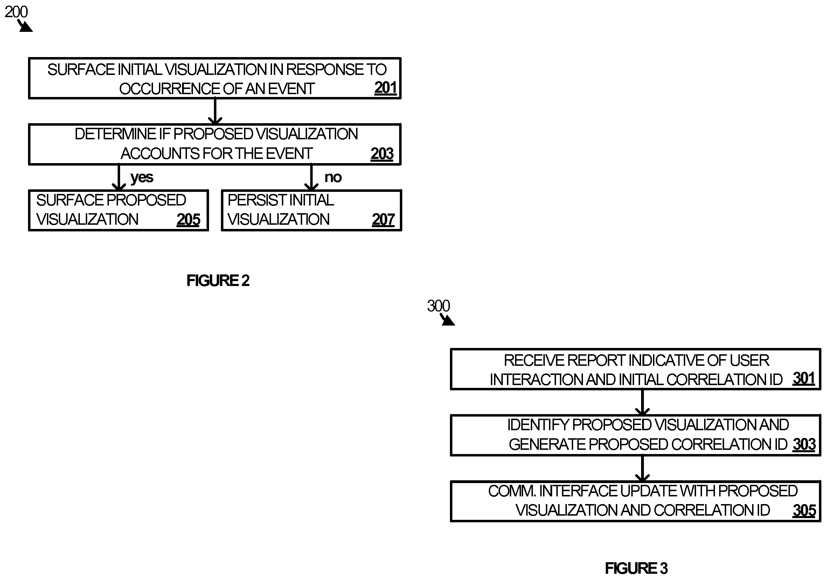

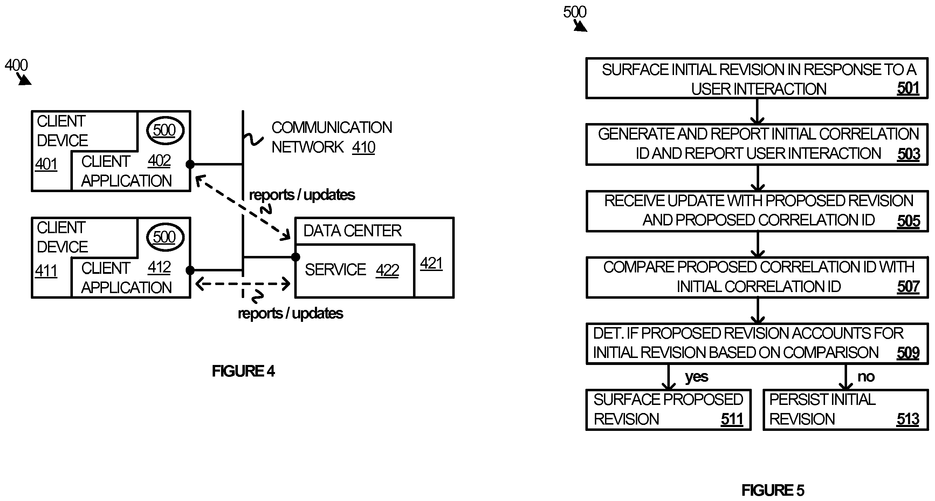

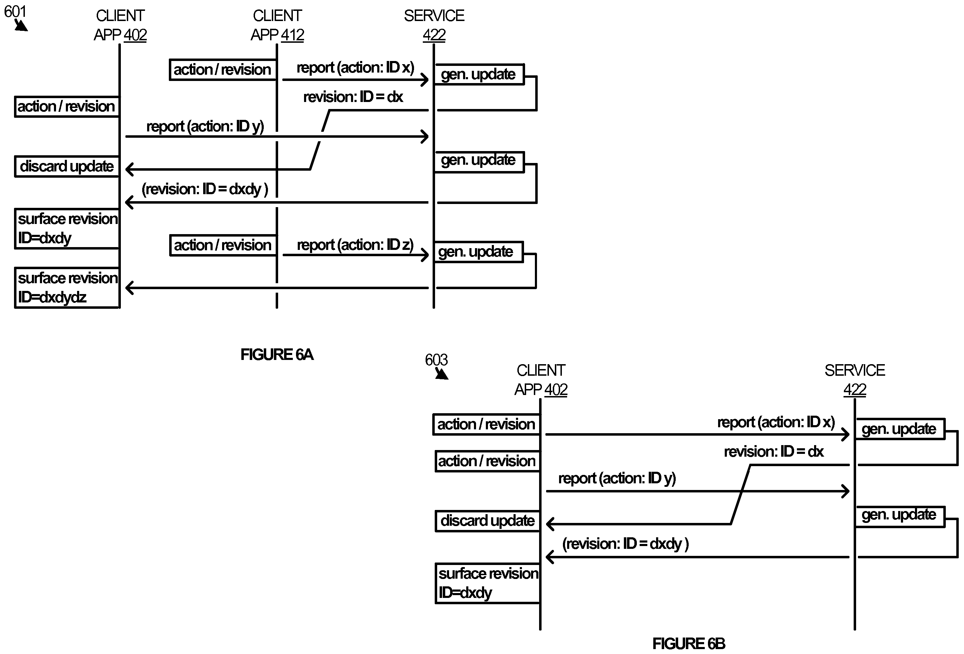

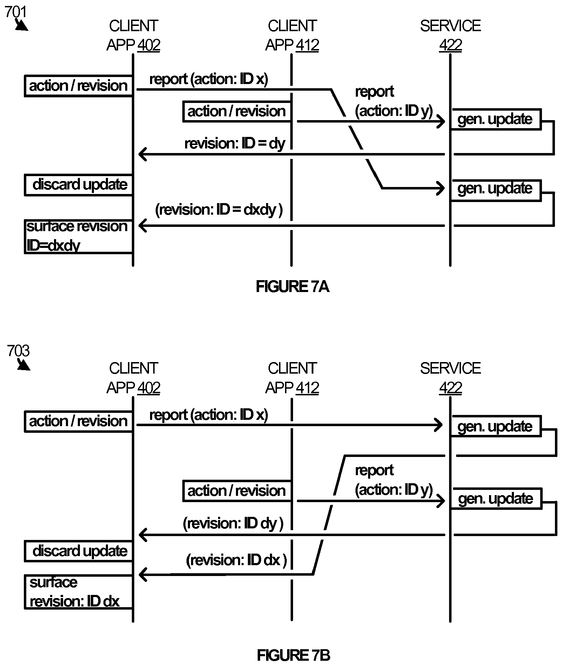

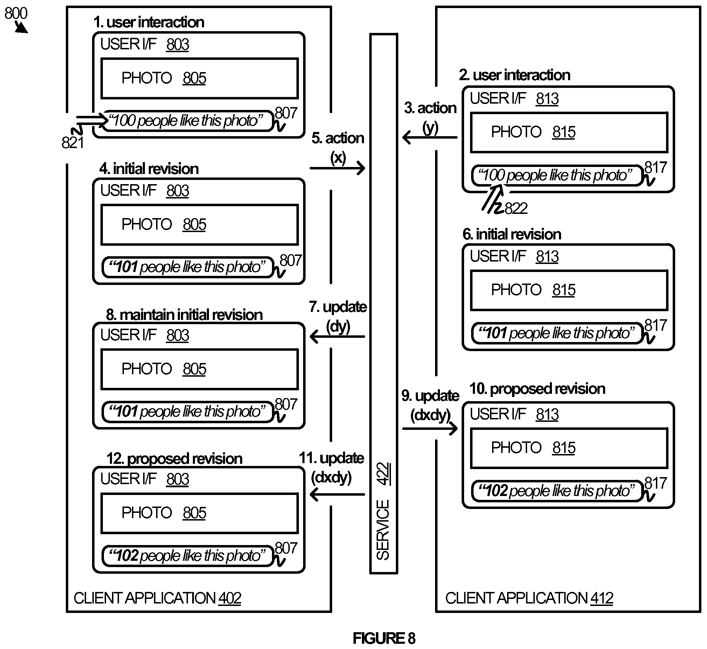

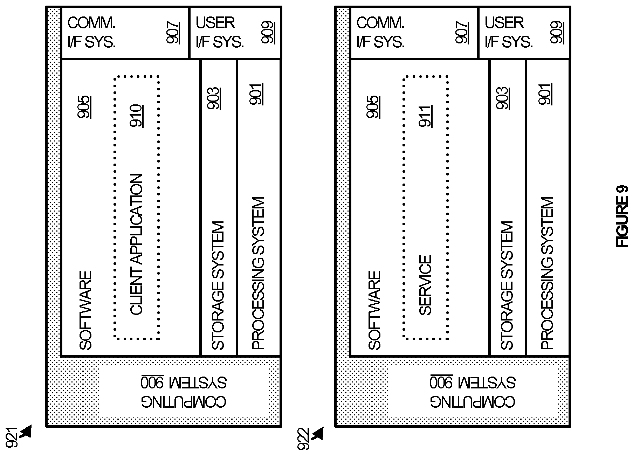

Referring now to the drawings, Figure 1 illustrates an operational scenario in which a client application communicates with a service to implement enhanced updates in a user interface to the service. Figure 2 illustrates an update process employed by the client application and another update process employed by the service. Figure 4 illustrates enhanced user interface updates in another operational scenario that involves client applications and a service. Figure 5 illustrates an update process that may be employed by the client applications. Figure 6, Figure 7A, and Figure 7B illustrate various operational sequences that may occur in the context of updating user interfaces. Figure 8 illustrates an operational scenario that demonstrates various state changes in two user interfaces. Figure 9 illustrates a computing system suitable for implementing a client application or a service.

Turning to Figure 1, operational scenario 100 involves an application platform 101 on which client application 102 runs. Client application 102 communicates with service 112, running on service platform 111, to provide a user or users with access to service 112 through a user interface 103. User interface 103 includes various interface elements with which a user may interact by way of a user input, such as a mouse click, touch, gesture, spoken command, or any other type of user input. The user interface elements include interface element 105, interface element 107, and interface element 109. It may be appreciated that additional application platforms and additional client applications may be included in operational scenario 100.

Application platform 101 is representative of any physical or virtual computing system, device, or collection thereof capable of running client application 102 and implementing update process 200. Examples of application platform 101 include, but are not limited to, smart phones, laptop computers, tablet computers, desktop computers, hybrid computers, televisions, gaming machines, and virtual machines, as well as any variation or combination thereof, of which computing system 900 illustrated in Figure 9 is representative.

Client application 102 is representative of any software application, module, component, or collection thereof, capable of implementing update process 200 to enhance how user interface 103 is updated. Examples of client application 102 include, but are not limited to, email applications, real-time communication applications, blogging and micro-blogging applications, social networking applications, e-commerce applications, anti-virus applications, and gaming applications, as well as any other type of application capable of rendering a user interface and employing update process 200. Client application 102 may be a browser-based application that executes in the context of a browser application. In some implementations, client application 102 executes in the context of or in association with a web page or web site. However, client application 102 may also be a locally installed and executed application, a streamed application, a mobile application, or any combination or variation thereof. Client application 102 may be implemented as a stand-alone application or may be distributed across multiple applications.

Service platform 111 is representative of any physical or virtual computing system, device, or collection thereof capable of hosting all or a portion of service 112. Examples of service platform 111 include, but are not limited to, server computers, web servers, application servers, rack servers, blade servers, virtual machine servers, or tower servers, as well as any other type of computing system, of which computing system 900 illustrated in Figure 9 is representative. In some scenarios, service 112 may be implemented in a data center, a virtual data center, or in some other suitable computing facility.

Service 112 is representative of any service capable of interfacing with client application 102 and implementing update process 300 to facilitate enhanced updates to user interface 103. Examples of service 112 include, but are not limited to, web services, personal information management services (including email services and calendar services), real-time communication services, blogging and micro-blogging services, social networking services, e-commerce services, anti-virus services, and gaming services, as well as any other type of service, combination, or variations thereof. Service 112 may sometimes be referred to as a cloud services, an online service, or an Internet service, or in some other manner. It may be appreciated that, while in most implementations service 112 and client application 102 are deployed on separate systems and are remote relative to one another, in at least some implementations service 112 may be implemented on the same system or collection of systems as client application 102. For example, service 112 may be service that runs locally with respect to client application 102, such as a service provided by an operating system or a service running within a browser environment.

In operation, client application 102, when executing on application platform 101, renders user interface 103 through which a user may engage with service 112. A user may navigate through screens, menus, or other aspects of service 112, consume or compose content, participate in games, browser online merchandise, engage in communications, or experience service 112 in some other manner. To facilitate the user experience, user interface 103 includes user interface elements 105, 107, and 109 that represent the various icons, images, menus, or other objects with which the user may interact.

One particular user interaction 131 is illustrated in operational scenario 100, which represents an action taken by the user with respect to interface element 109. The user may have, for example, touched, selected, clicked on, or otherwise engaged with interface element 109. In response to such an event, client application 102 surfaces an initial visualization 133 associated with the event in user interface 103. In this example, the initial visualization 133 is represented by a change in fill pattern with respect to interface element 109. The change in fill pattern could be representative of, for instance, a change in state of interface element 109. In an email scenario, interface element 109 may represent an email or some other email object and the change in state may be a change in the state of an email from unread to read. In a social networking scenario, interface element 109 may represent an image and the change in state may be an increase in the number of "likes" received with respect to the image. In an e-commerce example, interface element pay represent a product and the change of state may pertain to an increase or decrease in product inventory. A variety of other scenarios, interface elements, and state changes are possible and may be considered within the scope of the present disclosure.

In response to the occurrence of user interaction 131, client application 102 also reports the user interaction to service 112. Reporting the action occurs in accordance with an action-reporting paradigm in which client applications report actions to a service rather than providing updated versions of objects to the service. The service may then determine what an appropriate state is for the object and replies with a proposed visualization 135 for client application 102 to surface in user interface 103.

However, client application 102 does not always surface the proposed visualization 135. Rather, client application 102 determines whether or not the proposed visualization 135 accounts for the event associated with the initial visualization 133, or namely, whether or not the proposed visualization 135 accounts for user interaction 131. The proposed visualization 135 may account for the event if service 112 has accounted for the event when generating the proposed visualization. This may be the case if the report of the user interaction 131 reaches service 112 or is otherwise considered by service 112 prior to its generation of the proposed visualization 135. However, the proposed visualization 135 may not account for the event if service 112 has not accounted for the event when generating the proposed visualization 135. For instance, it may be the case that the report of the user interaction 131 does not reach service 112 prior to its generation of the proposed visualization 135 or is not considered by service 112 for some other reason.

If the proposed visualization 135 does in fact account for user interaction 131, then client application 102 surfaces the proposed visualization 135 in user interface 103. The proposed visualization 135 is represented by a change in the fill pattern of interface element 109. If the proposed visualization 135 does not account for the user interaction 131, then client application 102 persists with the initial visualization 133 in user interface 103. The initial visualization 133 may be persisted in user interface 103 until another proposed visualization is received that accounts for user interaction 131 or until another initial visualization is identified and surfaced. In some scenarios, a proposed visualization may be accepted and surfaced event though it does not account for the initial visualization. This may occur when, for example, a certain amount of time has lapsed since the last proposed visualization was accepted. In other words, an initial visualization or a series of initial visualizations, if never replaced by a proposed visualization, may become stale, thereby forcing the acceptance of a proposed visualization.

In operational scenario 100, the initial visualization 133 and the proposed visualization 135 both pertain to interface element 109 for exemplary purposes. However, it may be appreciated that an initial visualization may pertain to another interface element other than, or in addition to, the interface element with which a user interaction is made. For instance, while the user interaction 131 implicated interface element 109, the initial visualization 133 could have surfaced with respect to interface element 105 or interface element 107. Moreover, events other than user interactions may trigger the surfacing of initial visualizations. For instance, background processes running in client application 102 may trigger modifications to user interface 103 that can be surfaced as initial visualizations.

Figure 2 illustrates an update process 200 employed by client application 102 in the context of operational scenario 100 but that may be implemented more generally in the context of other scenarios. In operation, client application 102 surfaces an initial visualization in response to the occurrence of an event (step 201). The event may be, for instance, a user interaction with an object in a user interface, an event triggered by a background process, or some other type of event in response to which a visualization may be surfaced. Surfacing the initial visualization may include modifying the state of an object such that its appearance or information represented therein changes. Other types of visualizations are possible and may be considered within the scope of the disclosure.

After surfacing the initial visualization, client application 102 receives an update to the user interface communicated by service 112 that includes a proposed visualization to surface in the user interface. In some situations, client application 102 may have already communicated a report to service 112 information service 112 about the occurrence of the event. However, this is not always the case as client application 102 may have been offline for a period of time or otherwise unable to report the event. In other cases, client application 102 may have reported the event, but the event is not received successfully or processing of the event by service 112 is delayed for some other reason.

As such, the update received from service 112 may or may not account for the event. Client application 102 therefore examines the update to determine whether or not the proposed visualization accounts for the event (step 203). If so, client application 102 surfaces the proposed visualization in place of the initial visualization (step 205). But if the update does not account for the event, then the proposed visualization is discarded and client application 102 may persist the initial visualization instead (step 207).

Whether or not the update accounts for the event may be determined in a variety of ways. In at least on implementation, client application 102 associates an initial identifier with an initial visualization surfaced in the user interface in response to an event. The initial identifier is then communicated along with any report of the event sent to service 112 such that service 112 may use the initial identifier to generate a proposed identifier when communicating a proposed visualization associated with the event. Client application 102 may thus know whether or not a proposed visualization was generated in association with an event by comparing the proposed identifier to the initial identifier associated with the event.

In another implementation, a description of an event to which a proposed visualization pertains may be provided by service 112 when communicating an update to client application 102. Client application 102 may then compare the description provided by service 112 to a description of an event associated with an initial visualization to determine whether or not the events are the same event. If so, the proposed visualization may be considered to account for the event.

Figure 3 illustrates update process 300 employed by service 112 in the context of operational scenario 100 but that may be implemented more generally in the context of other scenarios. In operation, service 112 receives a report from a client application indicative of a user interaction and a correlation identifier (step 301). The correlation identifier may be generated by a client application in association with an initial visualization surfaced in a user interface in response to the user interaction.

Service 112 next identifies a proposed visualization for at least one or more client applications to surface in response to the user interaction (step 303). Service 112 also generates a correlation identifier to associate with the proposed visualization. The correlation identifier may be generated based on the correlation identifier received with the report of the user interaction.

Service 112 then communicates an update to the one or more client applications that includes the proposed visualization and its associated correlation identifier (step 305). From the perspective of any particular one of the multiple client applications that receive the update, the proposed visualization may or may not account for an event reported by that particular client application. Whether or not it does may be determined by the client application based on an analysis of the proposed identifier, as discussed above.

In the aggregate, update process 200 and update process 300, running on client applications and a service respectively, may function together to correlate proposed visualizations with the events that occur locally with respect to the client applications. Correlating proposed visualizations with events allows client applications to persist visualizations that are initially surfaced in response to an event rather than replacing the visualizations with proposed visualizations that may not be associated with the event. This enhances the consistency of a user interface as transitions or flashes between objects states in a user interface are avoided or at least mitigated by persisting initial visualizations.

Figure 4 illustrates another operational scenario 400 in an implementation. Operational scenario 400 involves client device 401, client device 411, and data center 421. Client application 402 runs on client device 401, client application 412 runs on client device 411, and service 422 is hosted in data center 421. Client application 402 and client application 412 communicate with service 422 over communication network 410.

Client device 401 is representative of any physical or virtual computing device capable of executing client application 402 and communicating over communication network 410 to allow client application 402 to interact with service 422. Examples of client device 401 include, but are not limited to, smart phones, tablet computers, laptop computers, desktop computers, cross-category hybrid computers, and virtual machines, as well as variation or combination thereof. Computing system 900, illustrated in Figure 9, is representative of one such computing device.

Client application 402 is representative of any software application, module, component, or collections thereof capable of running on client device 401 and communicating with service 422 over communication network 410. Client application 402 is also capable of implementing update process 500, illustrated in Figure 5. Examples of client application 402 include, but are not limited to, email applications, calendaring applications, unified communications applications, social networking application, e-commerce applications, productivity applications, anti-virus applications, and gaming applications, as well as any other type of application. Client application 402 may integrated in another application or may run within an execution environment provided by another application, such as a browser application. However, in some scenarios client application 402 may also be a stand-alone application that is locally installed and executed.

Client device 411 is representative of any physical or virtual computing device capable of executing client application 412 and communicating over communication network 410 to allow client application 412 to interact with service 422. Examples of client device 411 include, but are not limited to, smart phones, tablet computers, laptop computers, desktop computers, cross-category hybrid computers, and virtual machines, as well as variation or combination thereof. Computing system 900, illustrated in Figure 9, is representative of one such computing device.

Client application 412 is representative of any software application, module, component, or collections thereof capable of running on client device 411 and communicating with service 422 over communication network 410. Client application 412 is also capable of implementing update process 500, illustrated in Figure 5. Examples of client application 412 include, but are not limited to, email applications, calendaring applications, unified communications applications, social networking application, e-commerce applications, productivity applications, anti-virus applications, and gaming applications, as well as any other type of application. Client application 412 may integrated in another application or may run within an execution environment provided by another application, such as a browser application. However, in some scenarios client application 412 may also be a stand-alone application that is locally installed and executed.

Data center 421 is representative of any collection of computing equipment capable of hosting service 422. Data center 421 may be representative of a physical data center, a virtual data center, a single data center, multiple data centers, or any combination or variation thereof. Service 422 is representative of any service that is implemented in software and that may be hosted in data center 421. Examples of service 422 include, but are not limited to, email services, calendaring services, unified communications services, social networking services, e-commerce services, productivity services, anti-virus services, and gaming services, as well as any other suitable service.

In operational scenario 400, client application 402 and client application 412 both interact with service 422 in accordance with an action reporting paradigm. That is, when user interactions occur in the a user interface rendered by the client applications 402 and 412, the client applications 402 and 412 report the user interactions to service 422 rather than communicating new versions of objects implicated by the user interactions. In accordance with such a paradigm, service 422 processes the reports to determine how the objects may be modified to reflect the user interactions. Service 422 communicates user interface updates to client applications 402 and 412 with which the applications may refresh their user interfaces. However, client applications 402 and 412 do not always accept and surface the object modifications or revisions provided by service 422 as some updates may be inconsistent with the local experience specific to each application. Rather, client applications 402 and 412 both employ update process 500 to enhance the consistency of the user experience with respect to user interface updates provided by service 422.

Referring to Figure 5, a client application (such as client application 402 or client application 412) surfaces an initial revision to an object in a user interface in response to a user interaction (step 501). The user interaction may implicate the object directly or indirectly. The initial revision is a response determined locally by the client application without consulting service 422. The client application generates an initial correlation identifier to associate with the initial revision and reports the user interaction to service 422 in association with the initial correlation identifier (step 503).

In general, service 422 receives reports from various client applications that report various user interactions occurring with respect to multiple user interfaces. Service 422 processes the reports as they are received and, as mentioned above, determines how best to render the user interfaces to reflect the user interactions. Service 422 then communicates updates to the client applications with which to update their respective user interfaces.

Accordingly, the client application may receive an update from service 422 that includes a proposed revision to its user interface and proposed correlation identifier sent in association with the proposed revision (step 505). However, it is possible that that the proposed revision was not generated by service 422 in response to any user interaction reported by that specific client application. Rather, the proposed revision may have been identified in response to some other user interaction reported by some other client.

To avoid or mitigate a situation where the client application surfaces a proposed revision that is inconsistent with the local user experience the client application compares the proposed correlation identifier received in the update with the initial correlation identifier associated with the initial visualization presently or most recently surfaced in the user interface (step 507). The client application then determines whether or not the proposed revision accounts for the user interaction it had reported, which may be the same user interaction that is associated with the initial revision that is presently surfaced (step 509). Such a determination is made based at least in part on the comparison of the initial correlation identifier to the proposed correlation identifier. If the proposed revision was made in response to the user interaction associated with the initial revision, then the proposed correlation identifier will compare favorably with respect to the initial correlation identifier. If the propose revision was made in response to some other user interaction, then the proposed revision will compare unfavorably with respect to the initial correlation identifier.

If the proposed revision accounts for the user interaction, then the client application surfaces the proposed revision (step 511). If the proposed revision does not account for the user interaction, then the initial revision is persisted (step 513).

Figure 6A illustrates an operational sequence 601 that is representative of a message flow that may occur in an implementation in which enhanced updates are employed. In Figures 6A, 6B, 7A, and 7B, and in the associated discussions, various messages are communicated between service 422 and client application 402 and client application 412. While some of the messaging is communicated between service 422 and just one client application 402 or client application 412, it may be appreciated that the same messaging may be communicated to both client application 402 and client application 412. For example, where a revision is communicated by service 422 to client application 402, the same revision may also be communicated to client application 412, and vice versa.

Referring to Figure 6A, in operational sequence 601 an action occurs in a user interface rendered by client application 412. The action may be, for example, a user interaction with an object in the user interface. Client application 412 revises the object in response to the action. In addition, client application 412 reports the action to service 422 along with an identifier "x" associated with the action.

Service 422 receives the action form client application 412 and identifies a revision to make to the object implicated by the action. Service 422 also generates an identifier "dx" that is derived from the initial identifier received form client application 412 along with the action. The revision and the identifier dx are communicated to client application 402 in order for client application 402 to make the same revision to the same object in its own user interface.

However, in operational sequence 601 an action and corresponding revision has also occurred in the user interface rendered by client application 402. In addition, this action and revision pair was reported by client application 402 (with the revision associated with identifier "y") prior to client application 402 receiving the revision and associated identifier dx. Client application 402 processes the update from service 422 to determine whether or not to surface the revision associated with identifier dx. However, a comparison of identifier y to identifier dx informs client application 402 that the revision provided by service 422 does not account for the action that occurred locally with respect to client application 402 and that was given identifier y.

Continuing with the sequence, the action reported by client application 402 in association with identifier y is received by service 422. Service 422 identifies a revision in response to the reported action and generates an identifier "dxdy" that is derived from identifier y, but that is also derived from identifier x considering that the initial action reported by client application 412 is also considered when generating the revision. The revision and associated identifier dxdy are communicated to client application 402.

Client application 402 again receives the revision and associated identifier dxdy and compares the identifier dxdy to identifier y to determine whether or not to surface the revision. In this case, the comparison results in a determination that the revision does in fact account for the action associated with identifier y and client application 402 surfaces the revision accordingly.

After the revision is surfaced, another action occurs locally with respect to client application 412. Client application 412 reports the action in association with another identifier "z" to service 422. Service 422 generates an update that includes a new revision and an identifier "dxdydz" that represents that the update accounts for all three actions recently reported by client application 402 and client application 412. The revision and identifier dxdydz are communicated to client application 402, which surfaces the revision because it accounts for the action reported earlier in association with identifier y.

Figure 6B illustrates another operational sequence 603 that is representative of a message flow that may occur in an implementation in which enhanced updates are employed. In particular, operational sequence 603 demonstrates that such enhanced updating may improve the user experience by suppressing proposed updates that are provided by a service when the proposed updates do not account for subsequent local updates that may have occurred since the last local update reported to the service by a client.

For example, even though a service may provide an update with a proposed revision that accounts for an initial revision made by a client to a user interface, another initial revision may have been made by the same client in the meantime that is not accounted for by the proposed revision. Thus, even though the second initial revision is surfaced by the same client that implemented the first initial revision, the proposed revision may be suppressed, just as it would be had it not accounted for the first initial revision. Such situations may arise when, for example, a client is operating well ahead of the service and the service has not yet caught up to the state of the client.

In operational sequence 603, an action occurs in a user interface rendered by client application 402. The action may be, for example, a user interaction with an object in the user interface. Client application 402 revises the object in response to the action. In addition, client application 402 reports the action to service 422 along with an identifier "x" associated with the action.

Service 422 receives the action form client application 402 and identifies a revision to make to the object implicated by the action. Service 422 also generates an identifier "dx" that is derived from the initial identifier received from client application 402 along with the action. The revision and the identifier dx are communicated to client application 402 in order for client application 402 to update its user interface. It may be appreciated that the update proposed by service 422 may differ from the revision already surfaced by client application 402 because service 422 is capable of considering other actions occurring in other instances of the user interface that may impact how a given object or other aspects of a user interface to service 422 are to be displayed.

However, in operational sequence 603 another action and another corresponding revision have occurred in the user interface rendered by client application 402. In addition, this action and revision pair was reported by client application 402 (with the revision associated with identifier "y") prior to client application 402 receiving the revision and associated identifier dx. Client application 402 processes the update from service 422 to determine whether or not to surface the revision associated with identifier dx. However, a comparison of identifier y to identifier dx informs client application 402 that the revision provided by service 422 does not account for the action that occurred locally with respect to client application 402 and that was given identifier y.

Continuing with the sequence, the action reported by client application 402 in association with identifier y is received by service 422. Service 422 identifies a revision in response to the reported action and generates an identifier "dxdy" that is derived from identifier y, but that is also derived from identifier x considering that the initial action reported by client application 402 is also considered when generating the revision. The revision and associated identifier dxdy are communicated to client application 402.

Client application 402 again receives the revision and associated identifier dxdy and compares the identifier dxdy to identifier y to determine whether or not to surface the revision. In this case, the comparison results in a determination that the revision does in fact account for the action associated with identifier y and client application 402 surfaces the revision accordingly.

Figure 8 illustrates an operational scenario 800 that demonstrates an implementation of enhanced updating with respect to two different user interfaces to a service. In operation, client application 402 renders a user interface to service 422 that is represented by user interface 803. In this example, user interface 803 is representative of a user interface to a social networking service and includes a photo 805 and an interface element 807 that allows users to indicate that they like the photo 805. Service 422 is representative of a social networking service in this operational scenario. Operational scenario 800 also involves a user interface 813 provided to service 422 by client application 412. User interface 813 includes a version of the same photo, represented by photo 815, and an interface element 817 allowing a user to like the photo 815.

Various states of user interface 803 and user interface 813 are illustrated in operational scenario 800 to demonstrate how enhanced updating as described herein may benefit the user experience. In operation, a user interaction 821 occurs with respect to user interface 803. In this example the user interaction 821 is a touch, click, gesture, or some other input made with respect to interface element 807 to indicate the a user likes photo 805.

In addition, to user interaction 821, which occurred in user interface 803, a similar user interaction 822 occurs with respect to user interface 813 rendered by client application 412. User interaction 822 is a touch, click, gesture, or some other input made with respect to interface element 817 to indicate that a user (possibly the same or a different user than the user interfacing with user interface 803) likes photo 815.

It may be appreciated that photo 815 and photo 805 are merely local versions of the same underlying photo hosted by service 422. Thus, the two user interactions may cause the number of people represented as liking the photo to increment by two. However, if classic interface were employed, an inconsistent user experience may results with respect to at least one of the users. For example, user interaction 821 would be reported to service 422, as well as user interaction 822. In one scenario, service 422 would increment the number of likes from "100" to "102" and would provide an update to both user interfaces 803 and 813 with a revision to interface elements 807 and 817 to surface the number "102" in place of the number "100." Such a result would provide an inconsistent user experience as at least one of the users would expect their user interaction to increment the count to "101."

To avoid or mitigate such inconsistent user experiences, enhanced updating may be employed. Accordingly, client application 412 reports user interaction 822 to service 422 ahead of any reporting by client application 402 of user interaction 821. Client application 412 associates identifier "x" with the update. In the meantime, client application 402 has made an initial revision to interface element 807 incrementing the count associated with photo 805 from "100" to "101." Client application 412 has also made an initial revision to interface element 817 to increment the number of likes from "100" to "101" in accordance with what its user would expect to see.

The updates communicated by both client application 402 and client application 412 are eventually received successfully by service 422. One update reflects user interaction 821 and an associated identifier "y" while another reflect user interaction 822 and an associated identifier x. In this scenario, it is assumed for exemplary purposes that the processing of user interaction 821 is delayed relative to user interaction 822.

Service 422 responsively generates an update indicative of a proposed revision identified in response to user interaction 822 and communicates the update along with an identifier "dy" to client application 402. Client application 402 receives the update and determines whether or not to surface the proposed revision based on a comparison between identifier dy and identifier x, which is the identifier associated with its locally-driven revision to interface element 807. Client application 402 determines based on the comparison that the revision does not account for user interaction 821 has identifier x is not reflected or otherwise contained in identifier dy. Accordingly, the initial revision is maintained in user interface 803 and the proposed revision is discarded. The number of "likes" associated with photo 805 remains at "101" which is what the user engaged with user interface 803 would expect to see.

User interaction 821 is eventually processed by service 422 and a proposed revision is identified. In addition, an identifier "dxdy" is generated in association with the proposed revision that reflects that both user interaction 821 and user interaction 822 were considered when arriving at the proposed revision. A new update is communicated to both client application 402 and client application 412 that includes the proposed revision and the identifier dxdy. The proposed revision, which reflects an increment of the number of likes for the photo to "102," is accepted by both client application 402 and client application 412 as its associated identifier dxdy reflects that both user interaction 821 and user interaction 822 were considered by service 422 in the course of identifying the revision. The proposed revision is thus surfaced by client application 402 in user interface 803 and by client application 412 in user interface 813. The number of likes associated with photo 805 is represented as "102" after having been moved to "101," which is consistent with the user's expectations. The number of likes associated with photo 815 is also represented as "102" after having been moved to "101," is also consistent with user expectations.

Figure 9 illustrates two implementations of a computing system 900 that may be employed suitably as either or both of a client application and a service as discussed with respect to the application platforms, service platforms, client devices, and data center illustrated in Figure 1 and Figure 4. In implementation 921, computing system 900 is configured with client application 910 and is representative of application platform 101, client device 401, and client device 411. Client application 910 is representative of client application 102, client application 402, and client application 412. In implementation 922, computing system 900 is configured with service 911 and is representative of service platform 111 and any computing system suitable for data center 421. Service 911 is representative of service 112 and service 422.

Examples of computing system 900 include, but are not limited to, desktop computers, laptop computers, tablet computers, notebook computers, mobile computing devices, smart phones, cell phones, media devices, televisions, and gaming devices, as well as any other type of physical or virtual computing machine capable of implementing client application 910. Examples of computing system 900 also include server computers, rack servers, web servers, cloud computing platforms, and data center equipment, as well as any other type of physical or virtual server machine, and any variation or combination thereof. In some implementations, a collection of multiple computing systems may be employed to implement all or portions of service 911 which may be hosted in one or more data centers, virtual data centers, or any other suitable computing facilities.

Computing system 900 may be implemented as a single apparatus, system, or device or may be implemented in a distributed manner as multiple apparatuses, systems, or devices. Computing system 900 includes, but is not limited to, processing system 901, storage system 903, software 905, communication interface system 907, and user interface system 909. Processing system 901 is operatively coupled with storage system 903, communication interface system 907, and user interface system 909. User interface system 909 is optional in some implementations. Processing system 901 loads and executes software 905 from storage system 903.

In implementation 921, when executed by processing system 901, software 905 directs processing system 901 to operate as described herein for any client application. In implementation 922, when executed by processing system 901, software 905 directs processing system 901 to operate as described herein for any service. Computing system 900 may optionally include additional devices, features, or functionality not discussed for purposes of brevity.

Referring still to Figure 9, processing system 901 may comprise a microprocessor and other circuitry that retrieves and executes software 905 from storage system 903. Processing system 901 may be implemented within a single processing device but may also be distributed across multiple processing devices or sub-systems that cooperate in executing program instructions. Examples of processing system 901 include general purpose central processing units, application specific processors, and logic devices, as well as any other type of processing device, combinations, or variations thereof.

Storage system 903 may comprise any computer readable storage media readable by processing system 901 and capable of storing software 905. Storage system 903 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 903 may also include computer readable communication media over which software 905 may be communicated internally or externally. Storage system 903 may be implemented as a single storage device but may also be implemented across multiple storage devices or sub-systems co-located or distributed relative to each other. Storage system 903 may comprise additional elements, such as a controller, capable of communicating with processing system 901 or possibly other systems.

Software 905 may be implemented in program instructions and among other functions may, when executed by processing system 901, direct processing system 901 to operate as described herein with respect to the various operational scenarios disclosed herein. In particular, the program instructions may include various components or modules that cooperate or otherwise interact to carry out the various processes and operational scenarios described herein. The various components or modules may be embodied in compiled or interpreted instructions or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 905 may include additional processes, programs, or components, such as operating system software or other application software. Software 905 may also comprise firmware or some other form of machine-readable processing instructions executable by processing system 901.

In general, software 905 may, when loaded into processing system 901 and executed, transform a suitable apparatus, system, or device (of which computing system 900 is representative) overall from a general-purpose computing system into a special-purpose computing system customized to facilitate enhanced user interface updating as described herein for each implementation. Indeed, encoding software 905 on storage system 903 may transform the physical structure of storage system 903. The specific transformation of the physical structure may depend on various factors in different implementations of this description. Examples of such factors may include, but are not limited to, the technology used to implement the storage media of storage system 903 and whether the computer-storage media are characterized as primary or secondary storage, as well as other factors.

For example, if the computer readable storage media are implemented as semiconductor-based memory, software 905 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Referring again to Figure 1 as an example, through the operation of a computing system or systems of which computing system 900 is representative, transformations may be performed with respect to a user interface 103 to a service 112. As an example, an initial visualization is rendered in user interface 103. In response to an update, the initial visualization is replaced with a proposed visualization, thereby changing the state of user interface 103 from a first state to a second, transformed state. Other examples of transformations are possible and may be considered within the scope of the present disclosure.

It should be understood that computing system 900 is generally intended to represent a computing system or systems on which software 905 may be deployed and executed in order to implement enhanced user interface updates. However, computing system 900 may also be suitable as any computing system on which software 905 may be staged and from where software 905 may be distributed, transported, downloaded, or otherwise provided to yet another computing system for deployment and execution, or yet additional distribution.

Communication interface system 907 may include communication connections and devices that allow for communication with other computing systems (not shown) over a communication network or collection of networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 900 and any other computing system (not shown) may occur over a communication network or networks and in accordance with various communication protocols, combinations of protocols, or variations thereof. Examples of communication networks over which computing system 900 may exchange information with other computing systems include intranets, the Internet, local area networks, wide area networks, wireless networks, wired networks, virtual networks, software defined networks, data center buses, computing backplanes, networks, or any combination or variation thereof. The aforementioned communication networks and protocols are well known and need not be discussed at length here. However, some communication protocols that may be used include, but are not limited to, the Internet protocol (IP, IPv4, IPv6, etc.), the transfer control protocol (TCP), and the user datagram protocol (UDP), as well as any other suitable communication protocol, variation, or combination thereof. In any of the aforementioned examples in which information is exchanged, the exchange of information may occur in accordance with any of a variety of protocols, including FTP (file transfer protocol), HTTP (hypertext transfer protocol), REST (representational state transfer), WebSocket, DOM (Document Object Model), HTML (hypertext markup language), CSS (cascading style sheets), HTML5, XML (extensible markup language), JavaScript, JSON (JavaScript Object Notation), and AJAX (Asynchronous JavaScript and XML), as well as any other suitable protocol, variation, or combination thereof.

User interface system 909 may include a keyboard, a mouse, a voice input device, a touch input device for receiving a touch gesture from a user, a motion input device for detecting non-touch gestures and other motions by a user, and other comparable input devices and associated processing elements capable of receiving user input from a user. Output devices such as a display, speakers, haptic devices, and other types of output devices may also be included in user interface system 909. In some cases, the input and output devices may be combined in a single device, such as a display capable of displaying images and receiving touch gestures. The aforementioned user input and output devices are well known in the art and need not be discussed at length here.

User interface system 909 may also include associated user interface software executable by processing system 901 in support of the various user input and output devices discussed above. Separately or in conjunction with each other and other hardware and software elements, the user interface software and user interface devices may support a graphical user interface, a natural user interface, or any other type of user interface. For example, user interface 103, user interface 803, or user interface 813 may be presented through user interface system 909. In addition, user input made with respect to the user interfaces can be input via user interface system 909.

The functional block diagrams, operational scenarios and sequences, and flow diagrams provided in the Figures are representative of exemplary systems, environments, and methodologies for performing novel aspects of the disclosure. While, for purposes of simplicity of explanation, methods included herein may be in the form of a functional diagram, operational scenario or sequence, or flow diagram, and may be described as a series of acts, it is to be understood and appreciated that the methods are not limited by the order of acts, as some acts may, in accordance therewith, occur in a different order and/or concurrently with other acts from that shown and described herein. For example, those skilled in the art will understand and appreciate that a method could alternatively be represented as a series of interrelated states or events, such as in a state diagram. Moreover, not all acts illustrated in a methodology may be required for a novel implementation.

The included descriptions and figures depict specific implementations to teach those skilled in the art how to make and use the best option. For the purpose of teaching inventive principles, some conventional aspects have been simplified or omitted. Those skilled in the art will appreciate variations from these implementations that fall within the scope of the invention. Those skilled in the art will also appreciate that the features described above can be combined in various ways to form multiple implementations. As a result, the invention is not limited to the specific implementations described above, but only by the claims and their equivalents.

## Claims

1. A system comprising:
an apparatus;
an email service (112, 422);
one or more computer readable storage media (903); and
program instructions stored on the one or more computer readable storage media (903) that, when executed by a processing system (901) of the apparatus, direct the processing system (901) to at least:
in response to a user interaction (131, 821, 822) with at least an email object in a user interface (103, 803, 813) to the email service (112, 422), surface an initial revision (133) to the email object;
process an interface update from the email service (112, 422) that comprises a proposed revision (135) to the email object to determine if the proposed revision (135) accounts for the user interaction (131, 821, 822);
if the proposed revision (135) accounts for the user interaction (131, 821, 822), surface the proposed revision (135) in place of the initial revision (133); and
if the proposed revision (135) does not account for the user interaction (131, 821, 822), persist the initial revision (133) to the email object at least until an occurrence of another interface update from the email service (112, 422) which is another proposed revision (135) that accounts for the user interaction (131, 821, 822);
wherein the program instructions further direct the processing system to:
associate an initial correlation identifier with the initial revision (133) to the email object and identify a proposed correlation identifier associated with the proposed revision (135) to the email object, and wherein to determine if the proposed revision (135) to the email object accounts for the user interaction (131, 821, 822), the program instructions direct the processing system to perform a comparison of the proposed correlation identifier to the initial correlation identifier, wherein the comparison of the proposed correlation identifier to the initial correlation identifier indicates that the proposed revision (135) to the email object accounts for the user interaction (131, 821, 822) when the correlation identifier comprises the initial correlation identifier and indicates that the proposed revision (135) to the email object does not account for the user interaction (131, 821, 822) when the correlation identifier does not comprise the initial correlation identifier;
in response to the user interaction (131, 821, 822) occurring, report the user interaction (131, 821, 822) to the email service (112, 422) in association with the initial correlation identifier;
the email service (112, 422) being adapted to generate the proposed correlation identifier based at least in part on a correlation identifier most recently reported relative to other correlation identifiers reported in association with other user interactions (131, 821, 822).

2. The system of claim 1 further comprising:
the processing system configured to read the program instructions from the computer readable storage media and execute the program instructions; and
a user interface system configured to display the user interface (103, 803, 813);
wherein the user interaction (131, 821, 822) comprises a command received via the user interface system to change a state of an email represented by the email object.

3. A method for updating user interfaces (103, 803, 813) comprising:
in a service (112, 422) to which an application (102, 402, 412) provides a user interface (103, 803, 813), receiving a report from the application (102, 402, 412) indicative of at least a user interaction (131, 821, 822) that occurred in the user interface (103, 803, 812) and an initial correlation identifier associated with an initial revision (133) surfaced in the user interface (103, 803, 813) in response to the user interaction (131, 821, 822);
in the service (112, 422), identifying a proposed revision (135) to surface in the user interface (103, 803, 813), generating a proposed correlation identifier based at least in part on the initial correlation identifier, and associating the proposed correlation identifier with the proposed revision (135);
in the service (112, 422), communicating an interface update to the application (102, 402, 412) comprising the proposed revision (135) and the proposed correlation identifier,
further comprising, in the application (102, 402, 412):
surfacing the initial revision (133) in response to the user interaction (131, 821, 822);
communicating the report to the service (112, 422) and receiving the interface update; and
determining if the proposed revision (135) identified by the service (112, 422) accounts for the user interaction (131, 821, 822) by comparing the initial correlation identifier and the proposed correlation identifier, wherein the comparing of the initial correlation identifier and the proposed correlation identifier indicates that the proposed revision (135) accounts for the user interaction (131, 821, 822) when the correlation identifier comprises the initial correlation identifier and indicates that the proposed revision (135) does not account for the user interaction (131, 821, 822) when the correlation identifier does not comprise the initial correlation identifier,
wherein, if the proposed revision (135) accounts for the user interaction (131, 821, 822), surfacing the proposed revision (135) in place of the initial revision (133),
wherein, if the proposed revision (135) does not account for the user interaction (131, 821, 822), persisting the initial revision (133) in the user interface (103, 803, 813) at least until an occurrence of another interface update from the service (112, 422) which is another proposed revision (135) that accounts for the user interaction (131, 821, 822).

4. The method of claim 3 wherein the service (112, 422) comprises at least one of an email service, a calendar service, an e-commerce service, a social networking service, an office productivity service, an anti-virus service, and a micro-blogging service.

## Patentansprüche

1. Eine Vorrichtung umfassend:
einen Apparat;
einen Emailservice (112, 422);
ein oder mehrere computerlesbare Speichermedien (903); und
Programminstruktionen, die auf dem einen oder den mehreren computerlesbaren Speichermedien (903) gespeichert sind, die, wenn sie durch ein Verarbeitungssystem (901) des Apparats ausgeführt werden, das Verarbeitungssystem (901) zumindest dazu veranlassen:
in Antwort auf eine Benutzerinteraktion (131, 821, 822) mit mindestens einem Emailobjekt in einer Benutzerschnittstelle (103, 803, 813) des Emailservice (112, 422), eine Anfangsumarbeitung (133) des Emailobjekts darzustellen;
eine Schnittstellenaktualisierung des Emailservice (112, 422) zu verarbeiten, die eine vorgeschlagene Umarbeitung (135) des Emailobjekts umfasst, um zu ermitteln, ob die vorgeschlagene Umarbeitung (135) für die Benutzerinteraktion (131, 821, 822) passend ist;
wenn die vorgeschlagene Umarbeitung (135) für die Benutzerinteraktion (131, 821, 822) passend ist, die vorgeschlagene Umarbeitung (135) anstelle der Anfangsumarbeitung (133) darzustellen; und
wenn die vorgeschlagene Umarbeitung (135) für die Benutzerinteraktion (131, 821, 822) nicht passend ist, die Anfangsumarbeitung (133) des Emailobjekts beizubehalten, zumindest bis zu einem Auftreten einer anderen Schnittstellenaktualisierung des Emailservice (112, 422), die eine andere vorgeschlagene Umarbeitung (135) ist, die für die Benutzerinteraktion (131, 821, 822) passend ist;
wobei die Programminstruktionen das Verarbeitungssystem weiter dazu veranlassen:
einen Anfangskorrelationsidentifizierer mit der Anfangsumarbeitung (133) des Emailobjekts zu assoziieren und einen vorgeschlagenen Korrelationsidentifizierer mit der vorgeschlagenen Umarbeitung (135) des Emailobjekts zu assoziieren, und wobei, um zu ermitteln, ob die vorgeschlagene Umarbeitung (135) des Emailobjekts für die Benutzerinteraktion (131, 821, 822) passend ist, die Programminstruktionen das Verarbeitungssystem veranlassen, einen Vergleich des vorgeschlagenen Korrelationsidentifizierers mit dem Anfangskorrelationsidentifizierer durchzuführen, wobei der Vergleich des vorgeschlagenen Korrelationsidentifizierers mit dem Anfangskorrelationsidentifizierer anzeigt, dass die vorgeschlagene Umarbeitung (135) des Emailobjekts für die Benutzerinteraktion (131, 821, 822) passend ist, wenn der Korrelationsidentifizierer den Anfangskorrelationsidentifizierer umfasst und anzeigt, dass die vorgeschlagene Umarbeitung (135) des Emailobjekts für die Benutzerinteraktion (131, 821, 822) nicht passend ist, wenn der Korrelationsidentifizierer nicht den Anfangskorrelationsidentifizierer umfasst;
in Antwort auf die auftretende Benutzerinteraktion (131, 821, 822), die Benutzerinteraktion (131, 821, 822) an den Emailservice (112, 422) in Assoziation mit dem Anfangskorrelationsidentifizierer zu berichten;
den Emailservice (112, 422), der ausgebildet ist, den vorgeschlagenen Korrelationsidentifizierer zumindest teilweise basierend auf einem Korrelationsidentifizierer, der zuletzt relativ zu anderen Korrelationsidentifizieren in Assoziation mit anderen Benutzerinteraktionen (131, 821, 822) berichtet wurde, zu erzeugen.

2. Die Vorrichtung nach Anspruch 1, weiter umfassend:
das Verarbeitungssystem, das ausgebildet ist, die Programminstruktionen von den computerlesbaren Speichermedien zu lesen und die Programminstruktionen auszuführen; und
ein Benutzerschnittstellensystem, das ausgebildet ist, die Benutzerschnittstelle (103, 803, 813) darzustellen;
wobei die Benutzerinteraktion (131, 821, 822) ein Kommando umfasst, das durch das Benutzerschnittstellensystem empfangen wurde, um einen Zustand einer Email zu ändern, die durch das Emailobjekt dargestellt wird.

3. Ein Verfahren zum Aktualisieren von Benutzerschnittstellen (103, 803, 813) umfassend:
in einem Service (112, 422), an den eine Anwendung (102, 402, 412) eine Benutzerschnittstelle (103, 803, 813) liefert, Empfangen eines Berichts von der Anwendung (102, 402, 412), der zumindest eine Benutzerinteraktion (131, 821, 822) anzeigt, die in der Benutzerschnittstelle (103, 803, 812) aufgetreten ist, und einen Anfangskorrelationsidentifizierer, der mit einer Anfangsumarbeitung (133) assoziiert ist, die in der Benutzerschnittstelle (103, 803, 813) in Antwort auf die Benutzerinteraktion (131, 821, 822) dargestellt wird;
in dem Service (112, 422), Identifizieren einer vorgeschlagenen Umarbeitung (135) zum Darstellen in der Benutzerschnittstelle (103, 803, 813), Erzeugen eines vorgeschlagenen Korrelationsidentifizierers basierend zumindest teilweise auf dem Anfangskorrelationsidentifizierer und Assoziieren des vorgeschlagenen Korrelationsidentifizierers mit der vorgeschlagenen Umarbeitung (135);
in dem Service (112, 422), Kommunizieren einer Schnittstellenaktualisierung an die Anwendung (102, 402, 412) umfassend die vorgeschlagene Umarbeitung (135) und den vorgeschlagenen Korrelationsidentifizierer,
in der Anwendung (102, 402, 412) weiter umfassend:
Darstellen der Anfangsumarbeitung (133) in Antwort zu der Benutzerinteraktion (131, 821, 822);
Kommunizieren des Berichts zu dem Service (112, 422) und Empfangen der Schnittstellenaktualisierung; und
Ermitteln, ob die vorgeschlagene Umarbeitung (135), die durch den Service (112, 422) identifiziert wurde, für die Benutzerinteraktion (131, 821, 822) passend ist durch Vergleichen des Anfangskorrelationsidentifizieres und des vorgeschlagenen Korrelationsidentifizierers, wobei das Vergleichen des Anfangskorrelationsidentifizieres und des vorgeschlagenen Korrelationsidentifizierers anzeigt, dass die vorgeschlagene Umarbeitung (135) für die Benutzerinteraktion (131, 821, 822) passend ist, wenn der Korrelationsidentifizierer den Anfangskorrelationsidentifizierer umfasst und anzeigt, dass die vorgeschlagene Umarbeitung (135) für die Benutzerinteraktion (131, 821, 822) nicht passend ist, wenn der Korrelationsidentifizierer nicht den Anfangskorrelationsidentifizierer umfasst,
wobei, wenn die vorgeschlagene Umarbeitung (135) für die Benutzerinteraktion (131, 821, 822) passend ist, Darstellen der vorgeschlagenen Umarbeitung (135) anstelle der Anfangsumarbeitung (133),
wobei, wenn die vorgeschlagene Umarbeitung (135) für die Benutzerinteraktion (131, 821, 822) nicht passend ist, Beibehalten der Anfangsumarbeitung (133) in der Benutzerschnittstelle (103, 803, 813) zumindest bis zu einem Auftreten einer anderen Schnittstellenaktualisierung von dem Service (112, 422), die eine andere vorgeschlagene Umarbeitung (135) ist, die für die Benutzerinteraktion (131, 821, 822) passend ist.

4. Das Verfahren nach Anspruch 3, wobei der Service (112, 422) zumindest eines von einem Emailservice, einem Kalenderservice, einem E-Commerce-Service, einem sozialen Netzwerkservice, einem Büroproduktivitätsservice, einen Antivirusservice und einem Microbloggingservice umfasst.

## Revendications

1. Système comprenant :
un appareil ;
un service de courrier électronique (112, 422) ;
un ou plusieurs supports de stockage lisibles par ordinateur (903) ; et
des instructions de programme stockées sur les un ou plusieurs supports de stockage lisibles par ordinateur (903) qui, lorsqu'elles sont exécutées par un système de traitement (901) de l'appareil, amènent le système de traitement (901) à au moins :
en réponse à une interaction utilisateur (131, 821, 822) avec au moins un objet de courrier électronique dans une interface utilisateur (103, 803, 813) au service de courrier électronique (112, 422), faire émerger une révision initiale (133) à l'objet de courrier électronique ;
traiter une mise à jour d'interface à partir du service de courrier électronique (112, 422) qui comprend une révision proposée (135) à l'objet de courrier électronique pour déterminer si la révision proposée (135) prend en compte l'interaction utilisateur (131, 821, 822) ;
si la révision proposée (135) prend en compte l'interaction utilisateur (131, 821, 822), faire émerger la révision proposée (135) à la place de la révision initiale (133) ; et
si la révision proposée (135) ne prend pas en compte l'interaction utilisateur (131, 821, 822), faire persisiter la révision initiale (133) à l'objet de courrier électronique au moins jusqu'à l'apparition d'une autre mise à jour d'interface à partir du service de courrier électronique (112, 422) qui est une autre révision proposée (135) prenant en compte l'interaction utilisateur (131, 821, 822) ;
dans lequel les instructions de programme amènent en outre le système de traitement à :
associer un identifiant de corrélation initial avec la révision initiale (133) à l'objet de courrier électronique et identifier un identifiant de corrélation proposé associé avec la révision proposée (135) à l'objet de courrier électronique, et dans lequel, pour déterminer si la révision proposée (135) à l'objet de courrier électronique prend en compte l'interaction utilisateur (131, 821, 822), les instructions de programme amènent le système de traitement à effectuer une comparaison de l'identifiant de corrélation proposé avec l'identifiant de corrélation initial, la comparaison de l'identifiant de corrélation proposé à l'identifiant de corrélation initial indiquant que la révision proposée (135) à l'objet de courrier électronique prend en compte l'interaction utilisateur (131, 821, 822) lorsque l'identifiant de corrélation comporte l'identifiant de corrélation initial et indiquant que la révision proposée (135) à l'objet de courrier électronique ne prend pas en compte l'interaction utilisateur (131, 821, 822) lorsque l'identifiant de corrélation ne comporte pas l'identifiant de corrélation initial ;
en réponse à l'apparition de l'interaction utilisateur (131, 821, 822), signaler l'interaction utilisateur (131, 821, 822) au service de courrier électronique (112, 422) en association avec l'identifiant de corrélation initial ;
le service de courrier électronique (112, 422) étant adapté pour générer l'identifiant de corrélation proposé sur la base au moins en partie d'un identifiant de corrélation signalé le plus récemment par rapport à d'autres identifiants de corrélation signalés en association avec d'autres interactions utilisateur (131, 821, 822).

2. Système selon la revendication 1, comprenant en outre :
le système de traitement configuré pour lire les instructions de programme à partir des supports de stockage lisibles par ordinateur et exécuter les instructions de programme ; et
un système d'interface utilisateur configuré pour afficher l'interface utilisateur (103, 803, 813) ;
dans lequel l'interaction utilisateur (131, 821, 822) comprend une instruction reçue via le système d'interface utilisateur pour modifier un état d'un courrier électronique représenté par l'objet de courrier électronique.

3. Procédé de mise à jour d'interfaces utilisateur (103, 803, 813) comprenant de :
dans un service (112, 422) auquel une application (102, 402, 412) fournit une interface utilisateur (103, 803, 813), recevoir un rapport de l'application (102, 402, 412) indiquant au moins une interaction utilisateur (131, 821, 822) qui s'est produite dans l'interface utilisateur (103, 803, 812) et un identifiant de corrélation initial associé à une révision initiale (133) qui a émergé dans l'interface utilisateur (103, 803, 813) en réponse à l'interaction utilisateur (131, 821, 822) ;
dans le service (112, 422), identifier une révision proposée (135) à faire émerger dans l'interface utilisateur (103, 803, 813), générer un identifiant de corrélation proposé basé au moins en partie sur l'identifiant de corrélation initial, et associer l'identifiant de corrélation proposé avec la révision proposée (135) ;
dans le service (112, 422), communiquer une mise à jour d'interface à l'application (102, 402, 412) comprenant la révision proposée (135) et l'identifiant de corrélation proposé,
comprenant en outre, dans l'application (102, 402, 412) :
faire émerger la révision initiale (133) en réponse à l'interaction utilisateur (131, 821, 822) ;
communiquer le rapport au service (112, 422) et recevoir la mise à jour d'interface ; et
déterminer si la révision proposée (135) identifiée par le service (112, 422) prend en compte l'interaction utilisateur (131, 821, 822) en comparant l'identifiant de corrélation initial et l'identifiant de corrélation proposé, la comparaison de l'identifiant de corrélation initial et de l'identifiant de corrélation proposé indiquant que la révision proposée (135) prend en compte l'interaction utilisateur (131, 821, 822) lorsque l'identifiant de corrélation comporte l'identifiant de corrélation initial et indiquant que la révision proposée (135) ne prend pas en compte l'interaction utilisateur (131, 821, 822) lorsque l'identifiant de corrélation ne comporte pas l'identifiant de corrélation initial,
dans lequel, si la révision proposée (135) prend en compte l'interaction utilisateur (131, 821, 822), faire émerger la révision proposée (135) à la place de la révision initiale (133),
dans lequel, si la révision proposée (135) ne prend pas en compte l'interaction utilisateur (131, 821, 822), faire persister la révision initiale (133) dans l'interface utilisateur (103, 803, 813) au moins jusqu'à l'apparition d'une autre mise à jour d'interface à partir du service (112, 422) qui est une autre révision proposée (135) qui prend en compte l'interaction utilisateur (131, 821, 822).

4. Procédé selon la revendication 3, dans lequel le service (112, 422) comprend au moins un service de courrier électronique, un service d'agenda, un service de commerce électronique, un service de réseau social, un service de productivité commerciale, un service antivirus, et service de micro-blogging.
